# EUROPEAN PATENT APPLICATION

(11) **EP 4 650 819 A1**
(43) Date of publication of application: **19.11.2025**
(21) Application number: 23916176.3
(22) Date of filing: 05.12.2023
(51) Int. Cl.: G01S 7/481, G02B 7/00, H01L 31/107, H01S 5/40

(54) **OPTICAL SENSOR AND MANUFACTURING METHOD**

(30) Priority: 12.01.2023 JP 2023003330
(71) Applicant: DENSO CORPORATION, Kariya-city, Aichi 448-8661 (JP)
(72) Inventor: OGAWA Akira, Kariya-city, Aichi 448-8661 (JP)
(74) Representative: Kuhnen & Wacker Patent- und Rechtsanwaltsbüro PartG mbB
(86) International application number: PCT/JP2023/043369
(87) International publication number: WO 2024/150560

(57) **Abstract**

An optical sensor (10) includes: a projector light source module (22) that is configured to generate a projection beam (PB); a projector lens module (26) that is configured to guide the projection beam (PB), which is outputted from the projector light source module (22, 3022, 4022), toward an external environment along a projected light optical axis (POA); and a projector adhesive (28) that is ultraviolet and heat curable and is interposed between a projector bonding surface (222) of the projector light source module (22) and a projector bonding surface (262) of the projector lens module (26) which are opposed to each other in a light projecting direction (PD) of the projection beam (PB) along the projected light optical axis (POA). The projector bonding surface (222) of the projector light source module (22) and the projector bonding surface (262) of the projector lens module (26) form therebetween: a projector main gap (280) that is filled with the projector adhesive (28); and a projector sub-gap (281) that has a width larger than a width of the projector main gap (280) in the light projecting direction (PD) and opens toward a radially outer side around the projected light optical axis (POA). The projector adhesive (28) is filled continuously from the projector main gap (280) to the projector sub-gap (281) and spans both the projector bonding surface (222) of the projector light source module (22) and the projector bonding surface (262) of the projector lens module (26).

## Description

### CROSS REFERENCE TO RELATED APPLICATION

This application is based on and incorporates herein by reference Japanese Patent Application No. 2023-3330, filed in Japan on January 12, 2023.

### TECHNICAL FIELD

The present disclosure relates to an optical sensor and a manufacturing method thereof.

### BACKGROUND ART

Previously, there has been proposed an optical sensor that is configured to detect an external environment by projecting a projection beam toward the external environment and receiving a reflection beam which is reflected from the external environment in response to the projection beam. In the optical sensor of this type disclosed in the patent literature 1, an optical axis of a lens module, which guides the projection beam generated from a light source module toward the external environment, is positionally adjusted relative to the light source module.

### CITATION LIST

### PATENT LITERATURE

PATENT LITERATURE 1: JP 2017-003938A

### SUMMARY OF INVENTION

However, in the device disclosed in the patent literature 1, since the lens module is fixed to the light source module using screws, the positional adjustment in equal to or more than three axes is difficult. In view of this point, it is conceivable to use an adhesive, which is ultraviolet (UV) and heat curable, for fixing the lens module to the light source module.

However, in the case where the adhesive, which is UV and heat curable, is used, a size of a gap to be filled with the adhesive, which is not yet cured, varies at each filling location of the adhesive depending on a relative orientation of the modules. Thus, if there is an insufficient amount of adhesive relative to the gap size, a fixing strength between the modules decreases. In contrast, if an excessive amount of adhesive is used relative to the gap size, the adhesive that is overflown and is relieved from the gap may be exposed to the ultraviolet light, and thereby it prevents the UV light from reaching the adhesive filling the gap. This raises concerns about potential positional deviation of the optical axis.

Accordingly, it is an objective of the present disclosure to provide an optical sensor and a manufacturing method thereof which can ensure both optical axis adjustment accuracy of modules and a fixing strength between the modules.

Hereinafter, technical measures of the present disclosure for addressing the aforementioned objective will be described.

According to a first aspect of the present disclosure, there is provided an optical sensor that is configured to detect an external environment by projecting a projection beam toward the external environment and receiving a reflection beam which is reflected from the external environment in response to the projection beam, the optical sensor including:
a projector light source module that is configured to generate the projection beam;
a projector lens module that is configured to guide the projection beam, which is outputted from the projector light source module, toward the external environment along a projected light optical axis; and
a projector adhesive that is ultraviolet and heat curable and is interposed between a projector bonding surface of the projector light source module and a projector bonding surface of the projector lens module which are opposed to each other in a light projecting direction of the projection beam along the projected light optical axis, wherein:
   the projector bonding surface of the projector light source module and the projector bonding surface of the projector lens module form therebetween:
      a projector main gap that is filled with the projector adhesive; and
      a projector sub-gap that has a width larger than a width of the projector main gap in the light projecting direction and opens toward a radially outer side around the projected light optical axis, wherein the projector adhesive is filled continuously from the projector main gap to the projector sub-gap and spans both the projector bonding surface of the projector light source module and the projector bonding surface of the projector lens module.

According to a second aspect of the present disclosure, there is provided a manufacturing method for manufacturing the optical sensor of the first aspect, including:
placing the projector adhesive in the projector main gap and the projector sub-gap;
precuring a portion of the projector adhesive by irradiating an ultraviolet light to the projector sub-gap from the radially outer side around the projected light optical axis; and
heat curing a rest of the projector adhesive after the precuring of the portion of the projector adhesive.

According to the first and second aspects, the projector adhesive, which is ultraviolet and heat curable, is interposed between the projector bonding surface of the projector light source module and the projector bonding surface of the projector lens module which are opposed to each other in the light projecting direction along the projected light optical axis. Thus, the projector bonding surface of the projector light source module and the projector bonding surface of the projector lens module form therebetween: the projector main gap that is filled with the projector adhesive; and the projector sub-gap that has the width larger than the width of the projector main gap in the light projecting direction and opens toward the radially outer side around the projected light optical axis. The projector adhesive is filled continuously from the projector main gap to the projector sub-gap and spans both the projector bonding surface of the projector light source module and the projector bonding surface of the projector lens module.

As a result, even when the uncured projector adhesive is relieved from the projector main gap according to the relative orientation of the modules, the uncured projector adhesive, which is positioned to span both the projector bonding surfaces of the modules, can be exposed from the open portion of the projector sub-gap, which is wider than the projector main gap and opens toward the radially outer side. Therefore, when the ultraviolet light is irradiated from the radially outer side in this state, a portion of the projector adhesive in the projector sub-gap can be precured. Thus, after this precuring, the rest of the projector adhesive in the projector main gap can be heat cured while limiting positional deviation of the projected light optical axis. As a result, it is possible to ensure both the optical axis adjustment accuracy and the fixing strength between the modules.

According to a third aspect of the present disclosure, there is provided an optical sensor that is configured to sense an external environment by projecting a projection beam toward the external environment and receiving a reflection beam which is reflected from the external environment in response to the projection beam, the optical sensor including:
a receiver photodetector module that is configured to detect the external environment by receiving the reflection beam;
a receiver lens module that is configured to guide the reflection beam from the external environment toward the receiver photodetector module along a received light optical axis; and
a receiver adhesive that is ultraviolet and heat curable and is interposed between a receiver bonding surface of the receiver photodetector module and a receiver bonding surface of the receiver lens module which are opposed to each other in a light receiving direction of the reflection beam along the received light optical axis, wherein:
   the receiver bonding surface of the receiver photodetector module and the receiver bonding surface of the receiver lens module form therebetween:
   a receiver main gap that is filled with the receiver adhesive; and
   a receiver sub-gap that has a width larger than a width of the receiver main gap in the light receiving direction and opens toward a radially outer side around the received light optical axis, wherein the receiver adhesive is filled continuously from the receiver main gap to the receiver sub-gap and spans both the receiver bonding surface of the receiver photodetector module and the receiver bonding surface of the receiver lens module.

According to a fourth aspect of the present disclosure, there is provided a manufacturing method for manufacturing the optical sensor of the third aspect, including:
placing the receiver adhesive in the receiver main gap and the receiver sub-gap;
precuring a portion of the receiver adhesive by irradiating an ultraviolet light to the receiver sub-gap from the radially outer side around the received light optical axis; and
heat curing a rest of the receiver adhesive after the precuring of the portion of the receiver adhesive.

According to the third and fourth aspects, the receiver adhesive, which is ultraviolet and heat curable, is interposed between the receiver bonding surface of the receiver photodetector module and the receiver bonding surface of the receiver lens module which are opposed to each other in the light receiving direction along the received light optical axis. The receiver bonding surface of the receiver photodetector module and the receiver bonding surface of the receiver lens module form therebetween: the receiver main gap that is filled with the receiver adhesive; and the receiver sub-gap that has the width larger than the width of the receiver main gap in the light receiving direction and opens toward the radially outer side around the received light optical axis. The receiver adhesive is filled continuously from the receiver main gap to the receiver sub-gap and spans both the receiver bonding surface of the receiver photodetector module and the receiver bonding surface of the receiver lens module.

As a result, even when the uncured receiver adhesive is relieved from the receiver main gap according to the relative orientation of the modules, the uncured receiver adhesive, which is positioned to span both the receiver bonding surfaces of the modules, can be exposed from the open portion of the receiver sub-gap, which is wider than the receiver main gap and opens toward the radially outer side. Therefore, when the ultraviolet light is irradiated from the radially outer side in this state, a portion of the receiver adhesive in the receiver sub-gap can be precured. Thus, after this precuring, the rest of the receiver adhesive in the receiver main gap can be heat cured while limiting positional deviation of the received light optical axis. As a result, it is possible to ensure both the optical axis adjustment accuracy and the fixing strength between the modules.

### BRIEF DESCRIPTION OF DRAWINGS

FIG. 1 is a cross-sectional view showing an overall structure of an optical sensor according to a first embodiment.
FIG. 2 is a schematic diagram showing a projector unit according to the first embodiment.
FIG. 3 is a schematic diagram showing a receiver unit according to the first embodiment.
FIG. 4 is a partial cross-sectional view showing a structure of the projector unit and a structure of the receiver unit according to the first embodiment.
FIG. 5 is a perspective view showing an external appearance of the projector unit according to the first embodiment.
FIG. 6 is a cross-sectional view showing a detailed structure of the projector unit according to the first embodiment.
FIG. 7 is a flowchart illustrating a manufacturing method of the projector unit according to the first embodiment.
FIG. 8 is a cross-sectional view for explaining the manufacturing method of the projector unit according to the first embodiment.
FIG. 9 is a cross-sectional view for explaining the manufacturing method of the projector unit according to the first embodiment.
FIG. 10 is a perspective view showing an external appearance of the receiver unit according to the first embodiment.
FIG. 11 is a cross-sectional view showing a detailed structure of the receiver unit according to the first embodiment.
FIG. 12 is a flowchart illustrating a manufacturing method of the receiver unit according to the first embodiment.
FIG. 13 is a cross-sectional view showing a detailed structure of a projector unit according to a second embodiment.
FIG. 14 is a cross-sectional view showing a detailed structure of a receiver unit according to the second embodiment.
FIG. 15 is a cross-sectional view showing a detailed structure of a projector unit according to a third embodiment.
FIG. 16 is a cross-sectional view showing a detailed structure of a receiver unit according to the third embodiment.
FIG. 17 is a cross-sectional view showing a detailed structure of a projector unit according to a fourth embodiment.
FIG. 18 is a cross-sectional view showing a detailed structure of a receiver unit according to the fourth embodiment.
FIG. 19 is a cross-sectional view showing a detailed structure of a projector unit according to a modification of the first embodiment.
FIG. 20 is a cross-sectional view showing a detailed structure of a receiver unit according to the modification of the first embodiment.
FIG. 21 is a cross-sectional view showing a detailed structure of a projector unit according to another modification of the first embodiment.
FIG. 22 is a cross-sectional view showing a detailed structure of a receiver unit according to the other modification of the first embodiment.

### DESCRIPTION OF EMBODIMENTS

Hereinafter, embodiments of the present disclosure will be described with reference to the drawings. In each of the following embodiments, components, which correspond to each other, are indicated by the same reference signs, and redundant explanations may be omitted. Further, when only any one or more of the components are described in the respective embodiments, the description of the rest of the components described in the preceding embodiment(s) may be applied to the rest of the components. In addition to the combinations of the components that are specifically shown to be combinable in the respective embodiments, it is also possible to partially combine the embodiments even if they are not specifically shown, provided that the combinations are not impeded.

### (First Embodiment)

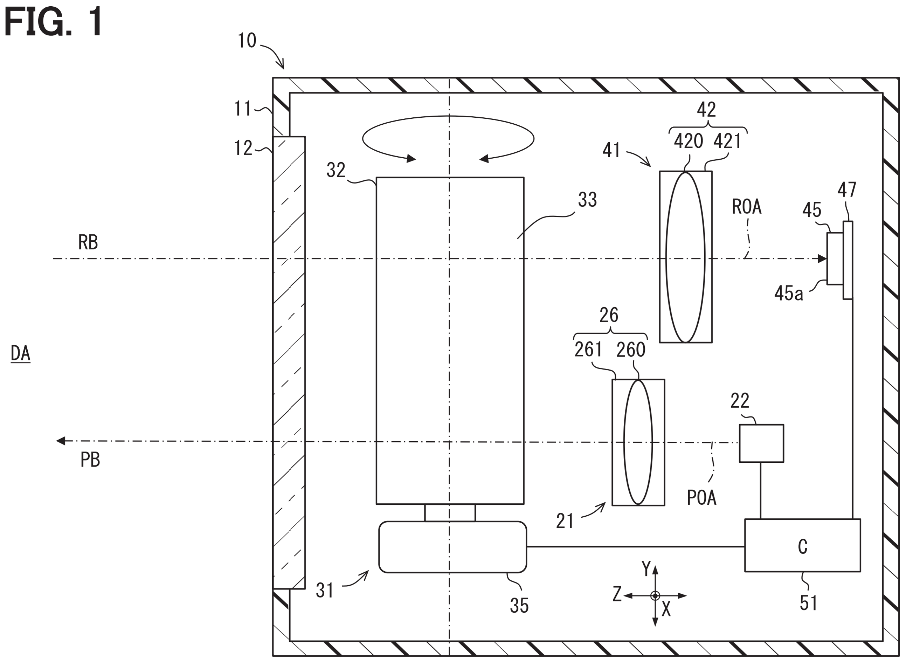

As shown in FIG. 1, an optical sensor 10 according to the first embodiment of the present disclosure is a LiDAR (Light Detection and Ranging/Laser Imaging Detection and Ranging) device, configured to be installed on a moving object to optically detect an external environment. The moving object, on which the optical sensor 10 is to be installed, is a vehicle, such as an automobile, capable of at least one type of operation among a manual driving operation, an autonomous driving operation, and a remote driving operation. In the following description, unless otherwise specified, the directions of front, rear, up, down, left and right are defined based on the vehicle on a horizontal plane. In the following description, a horizontal direction and a vertical direction respectively refer to a direction parallel to and a direction perpendicular to the horizontal plane, on which the vehicle is placed. Furthermore, in the following description, a gravity direction refers to the downward direction within the vertical direction relative to the vehicle on the horizontal plane.

The optical sensor 10 is installed in at least one location on the vehicle, such as a front portion, a left portion, a right portion, a rear portion and/or an upper roof. The optical sensor 10 projects a projection beam PB toward a detection area DA of the external environment, which corresponds to a location of the optical sensor 10 on the vehicle. The optical sensor 10 detects a return light which is a light reflected by a target in the detection area DA of the external environment after the projection beam PB is projected onto the target, and this return light is referred to as a reflection beam RB. A light in the near-infrared range, which is difficult for humans to perceive, is selected as the projection beam PB, which becomes the reflection beam RB.

The optical sensor 10 detects the target present in the detection area DA of the external environment by receiving the reflection beam RB reflected in response to the projection beam PB. The detection of the target of the external environment refers to identifying at least one or more types of information, including but not limited to a distance from the optical sensor 10 to the target, a direction in which the target is located, and a reflection intensity of the reflection beam RB from the target, and at least the distance should be included in the at least one or more types of information described above. A representative target(s), which serves as a detection subject(s), for the optical sensor 10 applied to the vehicle may include at least one type of moving object, such as a pedestrian(s), a cyclist(s), a non-human animal(s), or the other vehicle(s). Additionally or alternatively, the representative target(s), which serves as the detection subject(s), for the optical sensor 10 applied to the vehicle may include at least one type of stationary object, such as a guardrail(s), a road sign(s), a roadside structure(s), or an object(s) fallen on the road.

In the optical sensor 10, a three-dimensional coordinate system is defined using three mutually orthogonal axes, i.e., an X-axis, a Y-axis and a Z-axis. In particular, in the three-dimensional coordinate system of the present embodiment, an axial direction of the Y-axis is defined along the vertical direction of the vehicle, and an axial direction of the X-axis and an axial direction of Z-axis are defined along two different horizontal directions, respectively, of the vehicle. As a result, at the vehicle on the horizontal plane, an X-Y plane and a Y-Z plane of the three-dimensional coordinate system align with two vertical planes, respectively, perpendicular to the horizontal plane, and an X-Z plane aligns with the horizontal plane. In FIG. 1, a left-side portion, which is located on the left side of a dot-dash line extending in the axial direction of the Y-axis (i.e., on the side where a cover panel 12 described later is located), actually illustrates a cross-section that is perpendicular to a right-side portion, which is located on the right side of the dot-dash line in the axial direction of the Y-axis (i.e., on the side where units 21, 41 described later are located).

The optical sensor 10 includes a sensor base 11, a projector unit 21, a scanning unit 31, a receiver unit 41 and a control unit 51. The sensor base 11, which has light-blocking properties, is shaped in a box form and is made of, for example, metal or resin. The sensor base 11 is a housing or casing that receives the projector unit 21, the scanning unit 31 and the receiver unit 41 inside thereof. The sensor base 11 has an opening that is closed by the cover panel 12. The cover panel 12, which has translucent properties, is shaped in a plate form and is made of, for example, resin or glass.

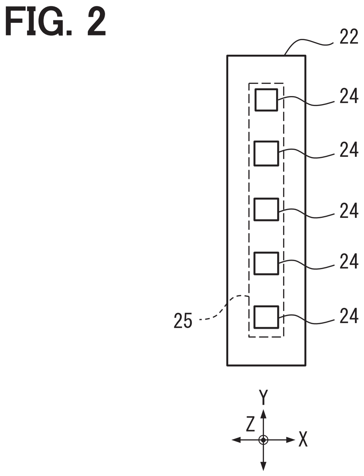

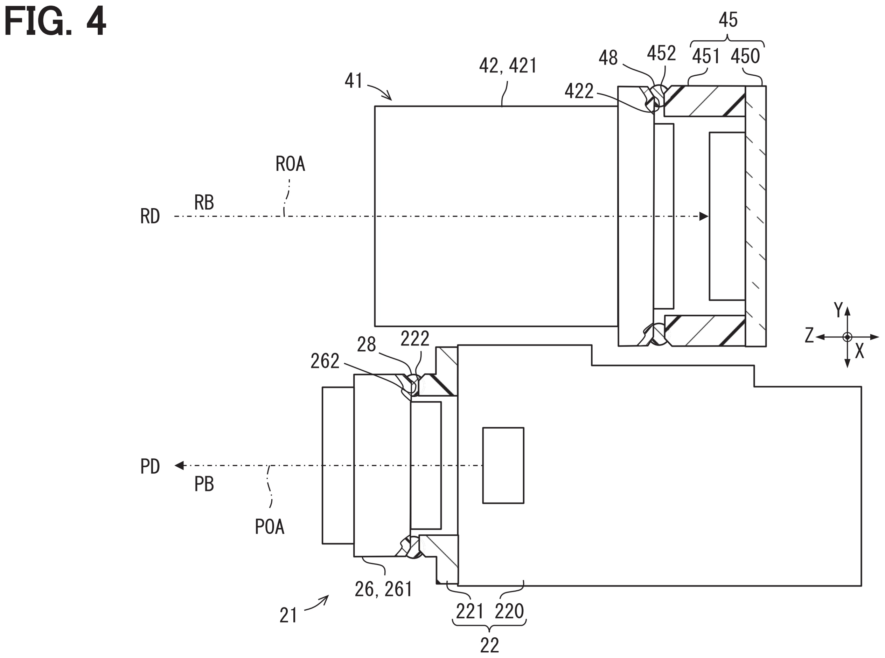

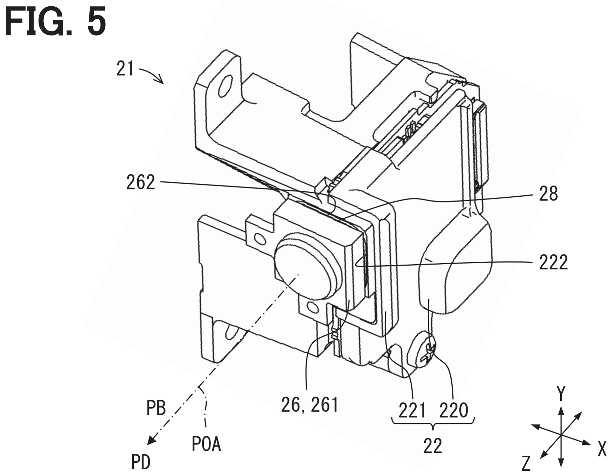

The projector unit 21 includes a projector light source module 22 and a projector lens module 26 (see also FIGS. 4 and 5 described later). As shown in FIG. 2, the projector light source module 22 includes a plurality of laser diodes 24 which form an array on a circuit board. In particular, in the present embodiment, the laser diodes 24 are arranged in a single row in the axial direction of the Y-axis. Each laser diode 24 generates pulsed laser light, which forms part of the projection beam PB, based on a control signal transmitted from the control unit 51. Each laser diode 24 may be an edge-emitting laser or a vertical cavity surface emitting laser (VCSEL).

The projector light source module 22 forms a light projection window 25 on one side of the circuit board, and the light projection window 25 is pseudo-defined to have a rectangular outline that is elongated in the axial direction of the Y-axis and shortened in the axial direction of the X-axis. The light projection window 25 is formed as an aggregate of laser emission apertures of the laser diodes 24. The laser lights emitted from the laser emission apertures of the laser diodes 24 are projected through the light projection window 25 as the projection beam PB, which is shaped into a vertically elongated line at the detection area DA, as shown in FIG. 1.

The projector lens module 26 has a structure in which at least one projector lens 260 is held by a lens barrel 261. The projector lens 260, which has translucent properties, is primarily made of a base material, such as resin or glass, and the projector lens 260 is formed into a lens shape according to an optical function it is designed to perform. The projector lens 260 performs at least one optical function, such as focusing, collimating, or shaping the light, on the projection beam PB projected from the projector light source module 22. The projector lens 260 is positioned within the lens barrel 261, which has light-blocking properties and is made of, for example, metal or resin (see also FIGS. 4 and 5 described later).

The projector lens module 26, which is configured in the above-described manner, is aligned with the projector light source module 22 to form a projected light optical axis POA. Accordingly, the projection beam PB, which is projected from the projector light source module 22, is guided toward the external environment of the vehicle along the projected light optical axis POA through the optical function of the projector lens module 26.

The scanning unit 31 includes a scanning mirror 32 and a scanning motor 35. The scanning mirror 32 is shaped in a plate form and is formed such that a reflective film is formed by vapor deposition at a reflective surface 33 that is on one side of a base material. The scanning mirror 32 is supported by the sensor base 11 such that the scanning mirror 32 can be driven to rotate around a rotational axis which extends in the axial direction of the Y-axis. The scanning mirror 32 is oscillated within a drive range, which is limited by mechanical or electrical stoppers. The scanning motor 35 is, for example, a voice coil motor, a brushed DC motor, or a stepping motor. An output shaft of the scanning motor 35 is coupled to the scanning mirror 32 either directly or indirectly through a drive mechanism such as a speed reducer. The scanning motor 35 is held by the sensor base 11 such that the scanning motor 35 can drive and rotate the scanning mirror 32 along with its output shaft. The scanning motor 35 rotates (i.e., oscillates) the scanning mirror 32 within the limited drive range based on a control signal transmitted from the control unit 51.

The scanning mirror 32 reflects the projection beam PB, which is received from the projector unit 21, off the reflective surface 33 and directs it through the cover panel 12 toward the detection area DA, and thereby the scanning mirror 32 scans the detection area DAaccording to the rotational angle of the scanning motor 35. At this time, the scanning of the detection area DA by the projection beam PB is performed in response to the rotation of the scanning mirror 32 and is substantially limited to horizontal scanning in the present embodiment.

The scanning mirror 32 uses the reflective surface 33 to reflect the reflection beam RB, which is received from the target in the detection area DA through the cover panel 12, toward the receiver unit 41 according to the rotational angle of the scanning motor 35. At this time, a speed of the projection beam PB and a speed of the reflection beam RB are sufficiently high relative to a rotational speed of the scanning mirror 32. As a result, the scanning mirror 32 guides the reflection beam RB toward the receiver unit 41, traveling opposite to the projection beam PB. This occurs because the reflection beam RB is reflected by the scanning mirror 32 which can set the rotational angle for the reflection beam RB substantially equal to the rotational angle for the projection beam PB.

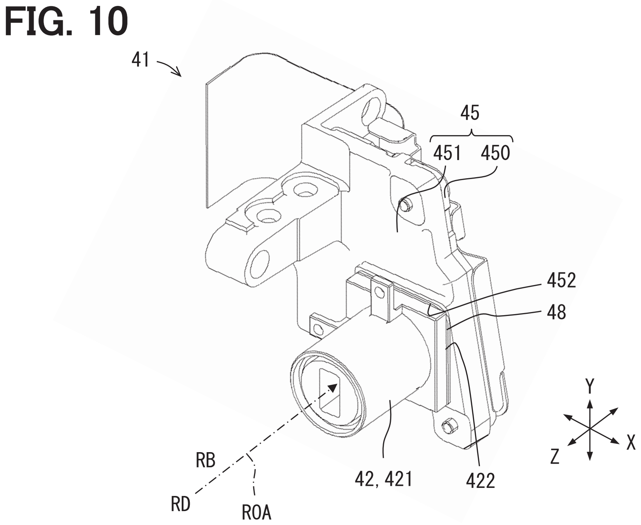

The receiver unit 41 includes a receiver lens module 42 and a receiver photodetector module 45 (see also FIGS. 4 and 10 described later). The receiver lens module 42 has a structure in which at least one receiver lens 420 is held by a lens barrel 421. The receiver lens 420, which has translucent properties, is primarily made of a base material, such as resin or glass, and the receiver lens 420 is formed into a lens shape according to an optical function it is designed to perform. The receiver lens 420 exerts an optical function such that the receiver lens 420 focuses the reflection beam RB from the scanning mirror 32 onto the receiver photodetector module 45. The receiver lens 420 is positioned within the lens barrel 421, which has light-blocking properties and is made of, for example, metal or resin (see also FIGS. 4 and 10 described later).

The receiver lens module 42, which is configured in the above-described manner, is aligned with the receiver photodetector module 45 to form a received light optical axis ROA. Here, the received light optical axis ROA of the receiver lens module 42 is offset in the axial direction of the Y-axis relative to the projected light optical axis POA of the projector lens module 26. As a result, the reflection beam RB, which is reflected from the reflective surface 33 of the scanning mirror 32 and is offset in the axial direction of the Y-axis, is guided along the received light optical axis ROA by the optical function of the receiver lens module 42, and thereby the reflection beam RB is focused onto the receiver photodetector module 45.

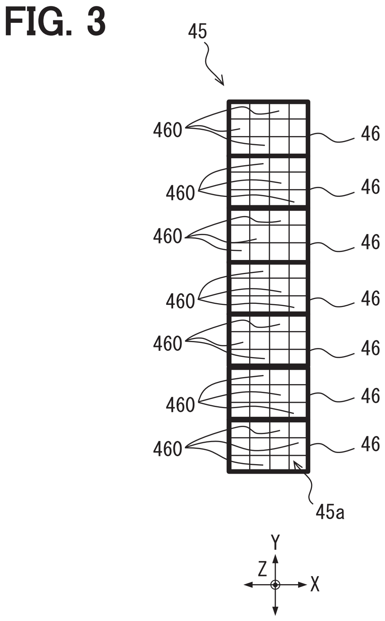

As shown in FIG. 3, the receiver photodetector module 45 includes a plurality of photodetector pixels 46 which form an array on a circuit board. The photodetector pixels 46 are arranged at least in the axial direction of the Y-axis. The receiver photodetector module 45 forms a light receiving surface 45a on one side of the circuit board, and the light receiving surface 45a has a rectangular outline that is elongated in the axial direction of the Y-axis and shortened in the axial direction of the X-axis. The light receiving surface 45a is formed as an aggregate of the light incident surfaces of the photodetector pixels 46. Here, each photodetector pixel 46 includes a plurality of photodetector elements 460, such as single photon avalanche diodes (SPADs). As shown in FIG. 1, each photodetector pixel 46 receives the reflection beam RB, which enters the light receiving surface 45a from the receiver lens module 42, as a line-shaped beam that is elongated in the axial direction of the Y-axis and shortened in the axial direction of the X-axis.

The receiver photodetector module 45 includes an output circuit 47. The output circuit 47 performs a sampling process for each control cycle according to a control signal transmitted from the control unit 51 in a detection frame for each scanning line that is synchronized with a projection cycle of the projection beam PB projected from the projector light source module 22 and corresponds to the rotational angle of the scanning mirror 32. At this time, the output circuit 47 generates a detection signal by synthesizing the response outputs from the photodetector elements 460 of each photodetector pixel 46 for each control cycle. The detection signal, which is generated in this manner, is outputted from the output circuit 47 to the control unit 51 for each scanning line.

The control unit 51 controls the detection of the target(s) for the detection area DA of the external environment. The control unit 51 includes at least one computer, which has a processor and a memory, as its main component. The control unit 51 is connected to the projector light source module 22, the scanning motor 35 and the receiver photodetector module 45. The control unit 51 controls the projector light source module 22 such that the projector light source module 22 generates the projection beam PB every projection cycle. In addition, the control unit 51 controls the scanning motor 35 such that the scanning and the reflection by the scanning mirror 32 are synchronized with the projection cycle of the projection beam PB from the projector light source module 22. Furthermore, the control unit 51 processes the detection signal outputted from the receiver photodetector module 45 in synchronization with the projection cycle of the projector light source module 22 and the scanning and the reflection by the scanning mirror 32, and thereby the control unit 51 generates detection data for the target(s) in the detection area DA.

Next, the structure of the projector unit 21 will be described in detail.

As shown in FIGS. 4 to 6, in the projector unit 21, the projector light source module 22 and the projector lens module 26 are opposed to each other in the axial direction of the Z-axis which is the light projecting direction PD along the projected light optical axis POA, along which the projection beam PB is guided. In the projector light source module 22, the projector holder 221, which holds the circuit board 220 that has the plurality of laser diodes 24 (see FIG. 2) installed thereon, forms a projector bonding surface 222 at an end surface of the projector holder 221 which is opposed to the projector lens module 26 in the light projecting direction PD. In the projector lens module 26, the lens barrel 261 forms a projector bonding surface 262 at an end surface of the lens barrel 261 which is opposed to the projector light source module 22 in the light projecting direction PD.

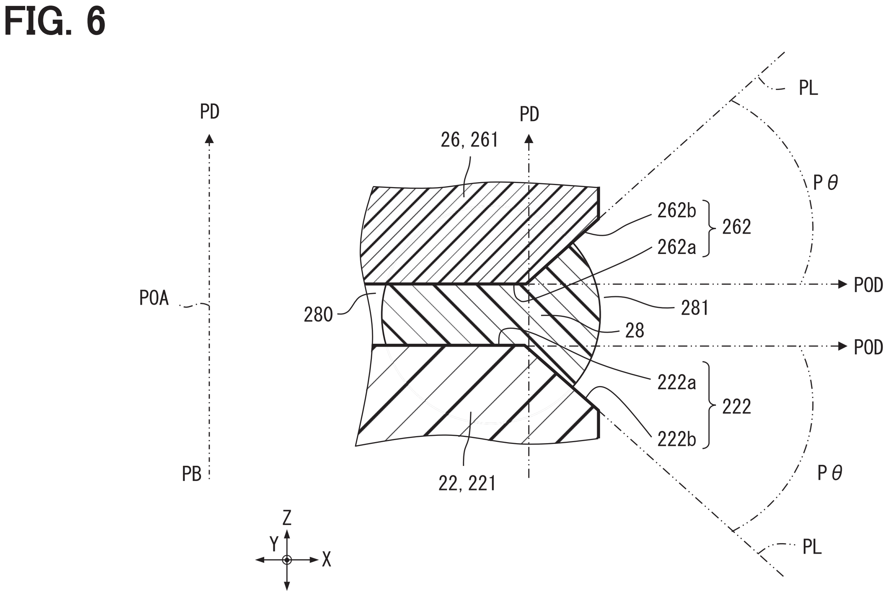

A projector adhesive 28 is interposed between the projector bonding surface 222 of the projector light source module 22 and the projector bonding surface 262 of the projector lens module 26 continuously all around the projected light optical axis POA. The projector adhesive 28 is an adhesive, such as epoxy resin, that is ultraviolet (UV) and heat curable, i.e., it can be cured by using either UV light or heat. As shown in FIG. 6, two types of gaps, i.e., a projector main gap 280 and a projector sub-gap 281, in each of which the projector adhesive 28 is placed, are formed between the projector bonding surface 222 of the projector light source module 22 and the projector bonding surface 262 of the projector lens module 26.

The projector main gap 280 is formed as an annular space that extends continuously all around the projected light optical axis POA between the projector bonding surfaces 222, 262. In each of the projector bonding surfaces 222, 262, a portion, which forms the projector main gap 280, forms a planar surface portion 222a, 262a which is ideally designed to be substantially perpendicular to the geometric central axis of its module 22, 26 (hereinafter simply referred to as a geometric central axis of the module 22, 26) while the geometric central axis of each module 22, 26 coincides with the projected light optical axis POA in the ideal design.

The projector sub-gap 281 is formed as an annular space that is located on the radially outer side of the projector main gap 280 and extends continuously all around the projected light optical axis POA between the projector bonding surfaces 222, 262. The projector sub-gap 281 is wider in the light projecting direction PD than the projector main gap 280, which is located on the radially inner side of the projector sub-gap 281 around the projected light optical axis POA. The projector sub-gap 281 opens toward a radially outer side, which is radially opposite to the projector main gap 280, all around the projected light optical axis POA.

In each of the projector bonding surfaces 222, 262, a portion, which forms the projector sub-gap 281, forms a slope surface portion (also referred to as a projector slope surface portion) 222b, 262b which is tilted at an acute angle relative to the geometric central axis of the module 22, 26. As a result, each of the slope surface portions 222b, 262b, which form the projector sub-gap 281, can be said to be also tilted at an acute angle relative to a corresponding one of the planar surface portions 222a, 262a, which form the projector main gap 280, while the corresponding one of the planar surface portions 222a, 262a is connected to a radially inner end of the slope surface portion 222b, 262b around the projected light optical axis POA.

In the first embodiment, the slope surface portions 222b, 262b of both of the projector bonding surfaces 222, 262 are respectively tilted in a tapered form such that each slope surface portion 222b, 262b is progressively spaced away from the other one of the projector bonding surfaces 262, 222 opposed thereto toward the radially outer side around the projected light optical axis POA, thereby forming the projector sub-gap 281. In particular, each of the slope surface portions 222b, 262b may be tilted at a taper angle Pθ of about 45 degrees such that the slope surface portion 222b, 262b is tilted along a bisector line PL that bisects an angle between the light projecting direction PD and a perpendicular direction POD that is perpendicular to the light projecting direction PD. With this configuration, the width of the projector sub-gap 281 in the light projecting direction PD is set to progressively increase from a width shared with the projector main gap 280 toward the radially outer side around the projected light optical axis POA.

Thereby, the projector main gap 280 is filled with the projector adhesive 28, which spans both the planar surface portions 222a, 262a of the projector bonding surfaces 222, 262 in the light projecting direction PD. Also, the projector sub-gap 281 is filled with the projector adhesive 28, which extends continuously from the projector main gap 280 around the projected light optical axis POA toward the radially outer side and spans both the slope surface portions 222b, 262b of the projector bonding surfaces 222, 262 in the light projecting direction PD.

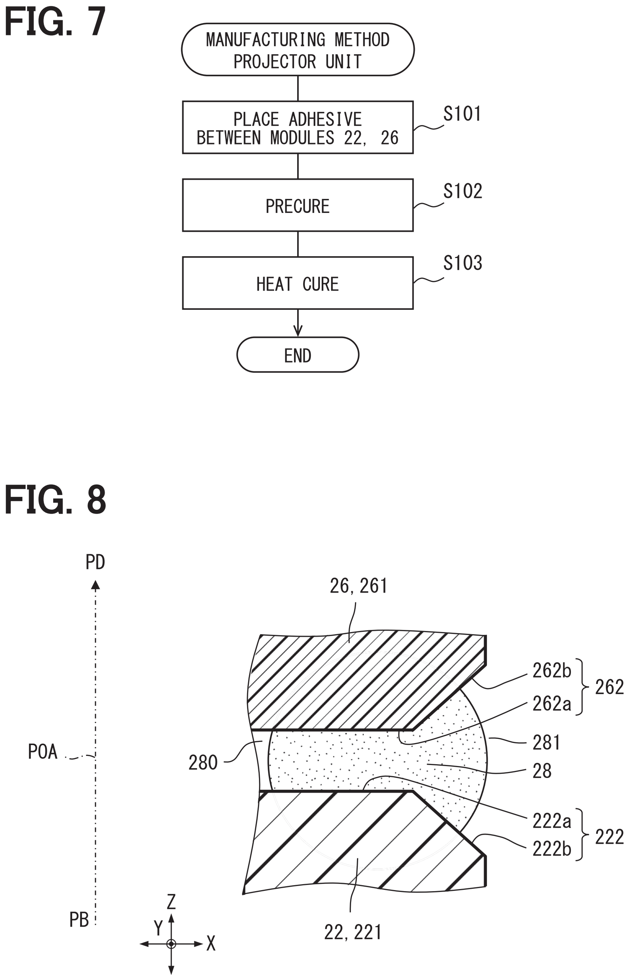

Next, a method for manufacturing the projector unit 21, as part of a manufacturing method for the optical sensor 10, will be described based on a manufacturing flow shown in FIG. 7. In the manufacturing flow shown in FIG. 7, "S" represents "manufacturing step" in the process of manufacturing the projector unit 21.

In a placing step of S101, the projector adhesive 28, which is in an uncured state such as a gel state, is first applied at least to a lower one of the planar surface portions 222a, 262a of the projector bonding surfaces 222, 262 of the modules 22, 26, while the lower one of the planar surface portions 222a, 262a is placed on the lower side of the other one of the planar surface portions 222a, 262a in the gravity direction. In the placing step of S101, subsequently, positions of the optical axes of the respective modules 22, 26 are first adjusted relative to each other through six-axis alignment using a positioning jig of a manufacturing device to determine the projected light optical axis POA, and then the relative orientation of the modules 22 26 is set.

Through the application operation and the orientation-setting operation described above, in the placing step of S101, as shown in FIG. 8, the projector adhesive 28, which is uncured and is placed between the modules 22, 26, is filled in the projector main gap 280 and is also pushed out from the projector main gap 280 into the projector sub-gap 281 to also fill the projector sub-gap 281. Therefore, the application amount of the projector adhesive 28 should be controlled to a level that allows the projector adhesive 28 to be filled across both the gaps 280, 281. Furthermore, in particular, under the orientation where the slope surface portion 222b, 262b of the lower one of the projector bonding surfaces 222, 262, which is set on the lower side of the upper one of the projector bonding surfaces 222, 262 in the gravity direction, is progressively spaced from the upper one of the projector bonding surfaces 222, 262 toward the radially outer side around the projected light optical axis POA, the projector adhesive 28 is sandwiched between the projector bonding surfaces 222, 262, which are set on the upper side and the lower side in the gravity direction.

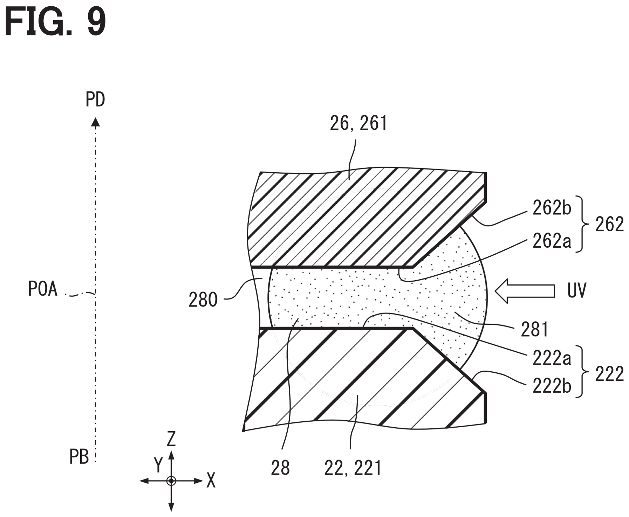

In the manufacturing flow shown in FIG. 7, in a precuring step of S102, which follows the placing step of S101, ultraviolet light is irradiated from the radially outer side around the projected light optical axis POA onto the projector sub-gap 281 between the modules 22, 26 whose relative orientation has been previously set. At this time, the ultraviolet light with a wavelength of, for example, 300-450 nm, is irradiated as shown in FIG. 9 and is absorbed by the projector adhesive 28 filling the projector sub-gap 281. As a result, the adhesive 28 undergoes a photopolymerization reaction and precures. For this purpose, the ultraviolet irradiation may be performed simultaneously over the entire area surrounding the projected light optical axis POA using an ultraviolet irradiation device that encircles the entire region. Alternatively, the ultraviolet irradiation may be performed sequentially at each targeted location by driving the ultraviolet irradiation device across the entire area surrounding the projected light optical axis POA.

In the precuring step of S102, irradiation conditions of the light, which is other than the above wavelength, may be controlled such that the portion of the projector adhesive 28 to be precured is at least a radially outermost portion of the projector adhesive 28, which is present in the projector sub-gap 281, around the projected light optical axis POA. In the precuring step of S102, in a case where an entirety of the projector adhesive 28 in the projector sub-gap 281 is cured, the irradiation conditions of the light, which is other than the above wavelength, may be controlled such that an outer peripheral portion of the projector adhesive 28, which is around the projected light optical axis POA filled in the projector main gap 280 and is a portion of the projector adhesive 28 filled in the projector main gap 280, is also precured. As described above, in the precuring step of S102, the portion of the projector adhesive 28 between the modules 22, 26 reaches a precured state.

In the manufacturing flow shown in FIG. 7, in a heat curing step of S103, which follows S102, a remaining uncured portion of the projector adhesive 28, which is after the precuring and held between the modules 22, 26 whose relative orientation has been previously set, is heat cured by heating. The heating at this stage involves placing the modules 22, 26, whose relative orientation has been previously set and which sandwich the projector adhesive 28 after the precuring, into a heating chamber, and controlling the heating conditions. As a result, an uncured portion of the adhesive 28, which remains at least in the projector main gap 280, is fully cured through the progression of thermal polymerization. As a result, the manufacturing of the projector unit 21 is completed.

Next, the structure of the receiver unit 41 will be described in detail.

As shown in FIGS. 4, 10 and 11, in the receiver unit 41, the receiver photodetector module 45 and the receiver lens module 42 are opposed to each other in the axial direction of the Z-axis which is the light receiving direction RD along the received light optical axis ROA, along which the reflection beam RB is guided. In the receiver photodetector module 45, the receiver holder 451, which holds the circuit board 450 that has the plurality of photodetector pixels 46 (see FIG. 3) installed thereon, forms a receiver bonding surface 452 at an end surface of the receiver holder 451 which is opposed to the receiver lens module 42 in the light receiving direction RD. In the receiver lens module 42, the lens barrel 421 forms a receiver bonding surface 422 at an end surface of the lens barrel 421 which is opposed to the receiver photodetector module 45 in the light receiving direction RD.

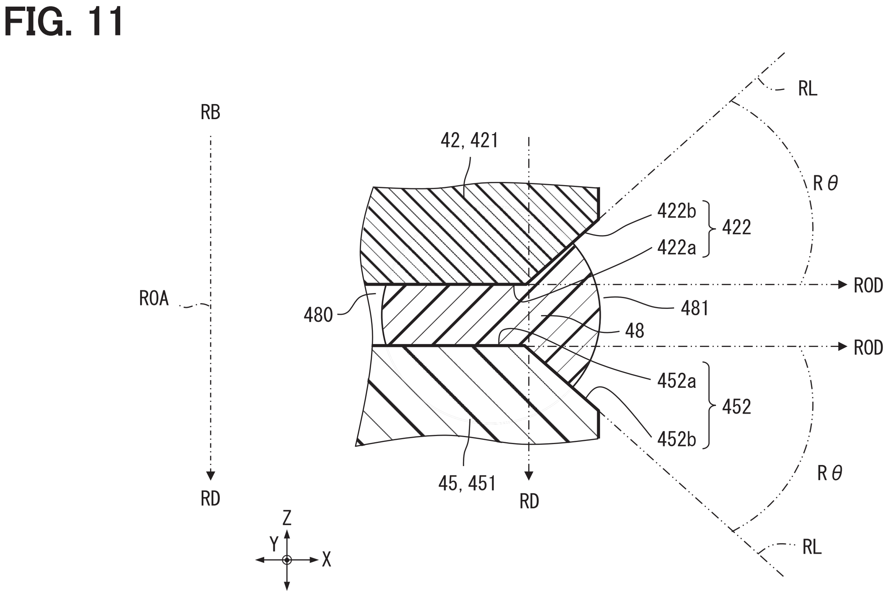

A receiver adhesive 48 is interposed between the receiver bonding surface 452 of the receiver photodetector module 45 and the receiver bonding surface 422 of the receiver lens module 42 continuously all around the received light optical axis ROA. The receiver adhesive 48 is an adhesive that is ultraviolet (UV) and heat curable and is essentially identical to the projector adhesive 28. As shown in FIG. 11, two types of gaps, i.e., a receiver main gap 480 and a receiver sub-gap 481, in each of which the receiver adhesive 48 is placed, are formed between the receiver bonding surface 452 of the receiver photodetector module 45 and the receiver bonding surface 422 of the receiver lens module 42.

The receiver main gap 480 is formed as an annular space that extends continuously all around the received light optical axis ROA between the receiver bonding surfaces 452, 422. In each of the receiver bonding surfaces 452, 422, a portion, which forms the receiver main gap 480, forms a planar surface portion 452a, 422a which is ideally designed to be substantially perpendicular to the geometric central axis of its module 45, 42 (hereinafter simply referred to as a geometric central axis of the module 45, 42) while the geometric central axis of each module 45, 42 coincides with the received light optical axis ROA in the ideal design.

The receiver sub-gap 481 is formed as an annular space that is located on the radially outer side of the receiver main gap 480 and extends continuously all around the received light optical axis ROA between the receiver bonding surfaces 452, 422. The receiver sub-gap 481 is wider in the light receiving direction RD than the receiver main gap 480, which is located on the radially inner side of the receiver sub-gap 481 around the received light optical axis ROA. The receiver sub-gap 481 opens toward a radially outer side, which is radially opposite to the receiver main gap 480, all around the received light optical axis ROA.

In each of the receiver bonding surfaces 452, 422, a portion, which forms the receiver sub-gap 481, forms a slope surface portion 452b, 422b which is tilted at an acute angle relative to the geometric central axis of the module 45, 42. As a result, each of the slope surface portions 452b, 422b, which form the receiver sub-gap 481, can be said to be also tilted at an acute angle relative to a corresponding one of the planar surface portions 452a, 422a, which form the receiver main gap 480, while the corresponding one of the planar surface portions 452a, 422a is connected to a radially inner end of the slope surface portion 452b, 422b around the received light optical axis ROA.

In the first embodiment, the slope surface portions 452b, 422b of both of the receiver bonding surfaces 452, 422 are respectively tilted in a tapered form such that each slope surface portion 452b, 422b is progressively spaced away from the other one of the receiver bonding surfaces 422, 452 opposed thereto toward the radially outer side around the received light optical axis ROA, thereby forming the receiver sub-gap 481. In particular, each of the slope surface portions 452b, 422b may be tilted at a taper angle Rθ of about 45 degrees such that the slope surface portion 452b, 422b is tilted along a bisector line RL that bisects an angle between the light receiving direction RD and a perpendicular direction ROD that is perpendicular to the light receiving direction RD. With this configuration, the width of the receiver sub-gap 481 in the light receiving direction RD is set to progressively increase from a width shared with the receiver main gap 480 toward the radially outer side around the received light optical axis ROA.

Thereby, the receiver main gap 480 is filled with the receiver adhesive 48, which spans both the planar surface portions 452a, 422a of the receiver bonding surfaces 452, 422 in the light receiving direction RD. Also, the receiver sub-gap 481 is filled with the receiver adhesive 48, which extends continuously from the receiver main gap 480 located on the radially inner side of the receiver sub-gap 481 around the received light optical axis ROA toward the radially outer side and spans both the slope surface portions 452b, 422b of the receiver bonding surfaces 452, 422 in the light receiving direction RD.

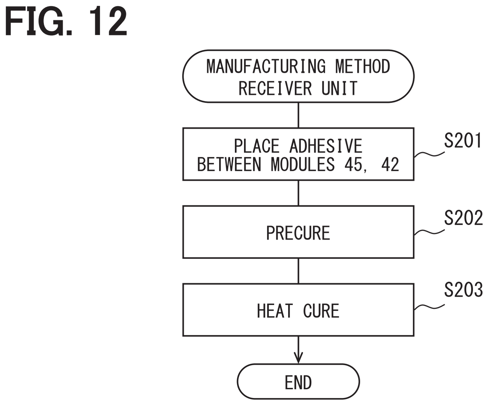

Next, a method for manufacturing the receiver unit 41, as part of the manufacturing method for the optical sensor 10, will be described based on a manufacturing flow shown in FIG. 12. In the manufacturing flow shown in FIG. 12, "S" represents "manufacturing step" in the process of manufacturing the receiver unit 41.

In a placing step of S201, the receiver adhesive 48 is first applied at least to a lower one of the planar surface portions 452a, 422a of the receiver bonding surfaces 452, 422 of the modules 45, 42, in a manner similar to S101, while the lower one of the planar surface portions 452a, 422a is placed on the lower side of the other one of the planar surface portions 452a, 422a in the gravity direction. In the placing step of S201, subsequently, positions of the optical axes of the respective modules 45, 42 are first adjusted relative to each other in a manner similar to S101 to determine the received light optical axis ROA, and then the relative orientation of the modules 45, 42 is set.

Through the application operation and the orientation-setting operation described above, in the placing step of S201, the receiver adhesive 48, which is uncured and is placed between the modules 45, 42, is filled in the receiver main gap 480 and is also pushed out from the receiver main gap 480 into the receiver sub-gap 481 to also fill the receiver sub-gap 481. Therefore, the application amount of the receiver adhesive 48 should be controlled to a level that allows the receiver adhesive 48 to be filled across both the gaps 480, 481. Furthermore, in particular, under the orientation where the projector slope surface portion 452b, 422b of the lower one of the receiver bonding surfaces 452, 422, which is set on the lower side of the upper one of the receiver bonding surfaces 452, 422, is progressively spaced from the upper one of the receiver bonding surfaces 452, 422 toward the radially outer side around the received light optical axis ROA, the receiver adhesive 48 is sandwiched between the receiver bonding surfaces 452, 422, which are set on the upper side and the lower side in the gravity direction.

In a precuring step of S202, which follows S201, the ultraviolet light is irradiated from the radially outer side around the received light optical axis ROA onto the receiver sub-gap 481 between the modules 45, 42 whose relative orientation has been previously set. At this time, the ultraviolet light is irradiated under irradiation conditions similar to those in S102 and is absorbed by the receiver adhesive 48 filling the receiver sub-gap 481. As a result, the receiver adhesive 48 undergoes a photopolymerization reaction and precures. As described above, in the precuring step of S202, the portion of the receiver adhesive 48 between the modules 45, 42 reaches a precured state.

In a heat curing step of S203, which follows S202, a remaining uncured portion of the receiver adhesive 48, which is after the precuring and held between the modules 45, 42 whose relative orientation has been previously set, is heat cured by heating. The heating at this stage is controlled in a manner similar to that of S103. As a result, an uncured portion of the receiver adhesive 48, which remains at least in the receiver main gap 480, is fully cured through the progression of thermal polymerization. As a result, the manufacturing of the receiver unit 41 is completed.

### (Actions and Advantages)

Actions and advantages of the first embodiment described above will be explained below.

According to the first embodiment, the projector adhesive 28, which is ultraviolet and heat curable, is interposed between the projector bonding surface 222 of the projector light source module 22 and the projector bonding surface 262 of the projector lens module 26 which are opposed to each other in the light projecting direction PD along the projected light optical axis POA. Thus, the projector bonding surface 222 of the projector light source module 22 and the projector bonding surface 262 of the projector lens module 26 form therebetween: the projector main gap 280 that is filled with the projector adhesive 28; and the projector sub-gap 281 that has the width larger than the width of the projector main gap 280 in the light projecting direction PD and opens toward the radially outer side around the projected light optical axis POA. The projector adhesive 28 is filled continuously from the projector main gap 280 to the projector sub-gap 281 and spans both the projector bonding surface 222 of the projector light source module 22 and the projector bonding surface 262 of the projector lens module 26.

As a result, even when the uncured projector adhesive 28 is relieved from the projector main gap 280 according to the relative orientation of the modules 22, 26, the uncured projector adhesive 28, which is positioned to span both the projector bonding surfaces 222, 262 of the modules 22, 26, can be exposed from the open portion of the projector sub-gap 281, which is wider than the projector main gap 280 and opens toward the radially outer side. Therefore, when the ultraviolet light is irradiated from the radially outer side in this state, a portion of the projector adhesive 28 in the projector sub-gap 281 can be precured. Thus, after this precuring, the rest of the projector adhesive 28 in the projector main gap 280 can be heat cured while limiting positional deviation of the projected light optical axis POA. As a result, it is possible to ensure both the optical axis adjustment accuracy and the fixing strength between the modules 22, 26.

Here, according to the first embodiment, the projector slope surface portions 222b, 262b of both of the projector bonding surfaces 222, 262 are respectively tilted such that the slope surface portion 222b, 262b of each of the projector bonding surfaces 262, 222 is progressively spaced away from the other one of the projector bonding surfaces 262, 222 opposed thereto toward the radially outer side around the projected light optical axis POA, thereby forming the projector sub-gap 281. As a result, in the cured projector adhesive 28, which spans both the projector bonding surfaces 222, 262 and fills the projector sub-gap 281, a stress concentration, which is generated at each interface between the projector adhesive 28 and a corresponding one of the projector bonding surfaces 222 262, can be suppressed. Moreover, due to the presence of the projector slope surface portions 222b, 262b, each of which is tilted along the bisector line PL that bisects the angle between the light projecting direction PD and the perpendicular direction POD that is perpendicular to the light projecting direction PD, the suppression of stress concentration in the cured projector adhesive 28 can be further enhanced. Furthermore, during the manufacturing, the lower one of the projector bonding surfaces 222, 262, which is set on the lower side of the upper one of the projector bonding surfaces 222, 262 in the gravity direction and has the projector slope surface portion 222b, 262b that is progressively spaced from the upper one of the projector bonding surfaces 222, 262 toward the radially outer side around the projected light optical axis POA, can be limited from separation from the projector adhesive 28, which is sandwiched between the projector bonding surfaces 222, 262, after the curing of the projector adhesive 28. For these reasons, in the first embodiment, it becomes possible to maintain the high fixing strength.

According to the first embodiment, the receiver adhesive 48, which is ultraviolet and heat curable, is interposed between the receiver bonding surface 452 of the receiver photodetector module 45 and the receiver bonding surface 422 of the receiver lens module 42 which are opposed to each other in the light receiving direction RD along the received light optical axis ROA. Thus, the receiver bonding surface 452 of the receiver photodetector module 45 and the receiver bonding surface 422 of the receiver lens module 42 form therebetween: the receiver main gap 480 that is filled with the receiver adhesive 48; and the receiver sub-gap 481 that has the width larger than the width of the receiver main gap 480 in the light receiving direction RD and opens toward the radially outer side around the received light optical axis ROA. The receiver adhesive 48 is filled continuously from the receiver main gap 480 to the receiver sub-gap 481 and spans both the receiver bonding surface 452 of the receiver photodetector module 45 and the receiver bonding surface 422 of the receiver lens module 42.

As a result, even when the uncured receiver adhesive 48 is relieved from the receiver main gap 480 according to the relative orientation of the modules 45, 42, the uncured receiver adhesive 48, which is positioned to span both the receiver bonding surfaces 452, 422 of the modules 45, 42, can be exposed from the open portion of the receiver sub-gap 481, which is wider than the receiver main gap 480 and opens toward the radially outer side. Therefore, when the ultraviolet light is irradiated from the radially outer side in this state, a portion of the receiver adhesive 48 in the receiver sub-gap 481 can be precured. Thus, after this precuring, the rest of the receiver adhesive 48 in the receiver main gap 480 can be heat cured while limiting positional deviation of the received light optical axis ROA. As a result, it is possible to ensure both the optical axis adjustment accuracy and the fixing strength between the modules 45, 42.

Here, according to the first embodiment, the receiver slope surface portions 452b, 422b of both of the receiver bonding surfaces 452, 422 are respectively tilted such that the slope surface portion 452b, 422b of each of the receiver bonding surfaces 452, 422 is progressively spaced away from the other one of the receiver bonding surfaces 452, 422 opposed thereto toward the radially outer side around the received light optical axis ROA, thereby forming the receiver sub-gap 481. As a result, in the cured receiver adhesive 48, which spans both the receiver bonding surfaces 452, 422 and fills the receiver sub-gap 481, a stress concentration, which is generated at each interface between the receiver adhesive 48 and a corresponding one of the receiver bonding surfaces 452, 422, can be suppressed. Moreover, due to the presence of the receiver slope surface portions 452b, 422b, each of which is tilted along the bisector line RL that bisects the angle between the light receiving direction RD and the perpendicular direction ROD that is perpendicular to the light receiving direction RD, the suppression of stress concentration in the cured receiver adhesive 48 can be further enhanced. Furthermore, during the manufacturing, the lower one of the receiver bonding surfaces 422, 452, which is set on the lower side of the upper one of the receiver bonding surfaces 422, 452 in the gravity direction and has the receiver slope surface portion 452b or 422b that is progressively spaced from the upper one of the receiver bonding surfaces 422, 452 toward the radially outer side around the received light optical axis ROA, can be limited from separation from the receiver adhesive 48, which is sandwiched between the receiver bonding surfaces 422, 452, after the curing of the receiver adhesive 48. For these reasons, it becomes possible to maintain the high fixing strength.

### (Second Embodiment)

The second embodiment is a modification of the first embodiment.

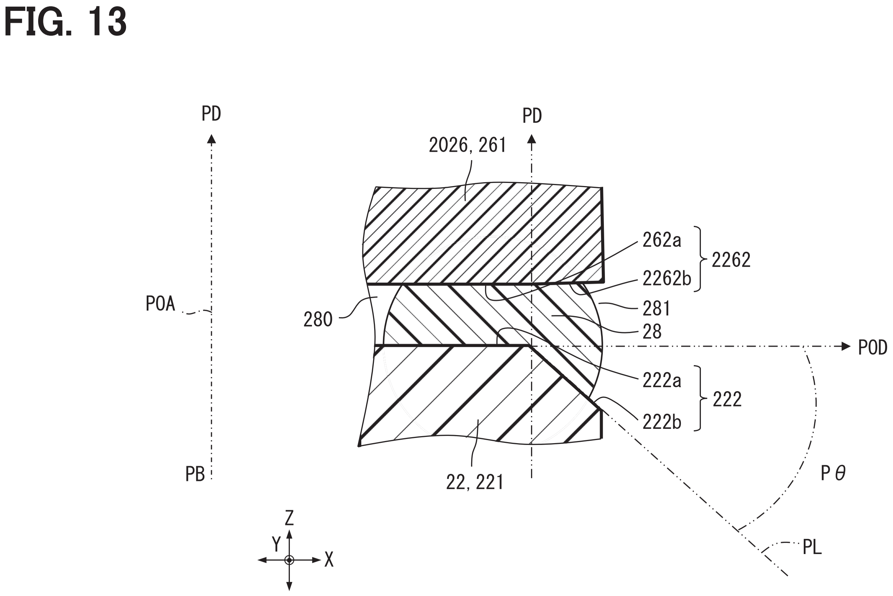

As shown in FIG. 13, in a projector lens module 2026 of the second embodiment, a portion of a projector bonding surface 2262, which forms the projector sub-gap 281, forms a planar surface portion 2262b, which is substantially perpendicular to the geometric central axis, on the same plane as the planar surface portion 262a. The projector sub-gap 281, which is wider in the light projecting direction PD than the projector main gap 280, is formed between the planar surface portion 2262b and the slope surface portion 222b. Thus, in the placing step of S101, under the orientation where the slope surface portion 222b of the lower one (i.e., the projector bonding surface 222) of the projector bonding surfaces 2262, 222, which is set on the lower side of the upper one (i.e., the projector bonding surface 2262) of the projector bonding surfaces 2262, 222 in the gravity direction, is progressively spaced from the upper one (i.e., the projector bonding surface 2262) of the projector bonding surfaces 2262, 222 toward the radially outer side around the projected light optical axis POA, the projector adhesive 28 is sandwiched between the projector bonding surfaces 2262, 222.

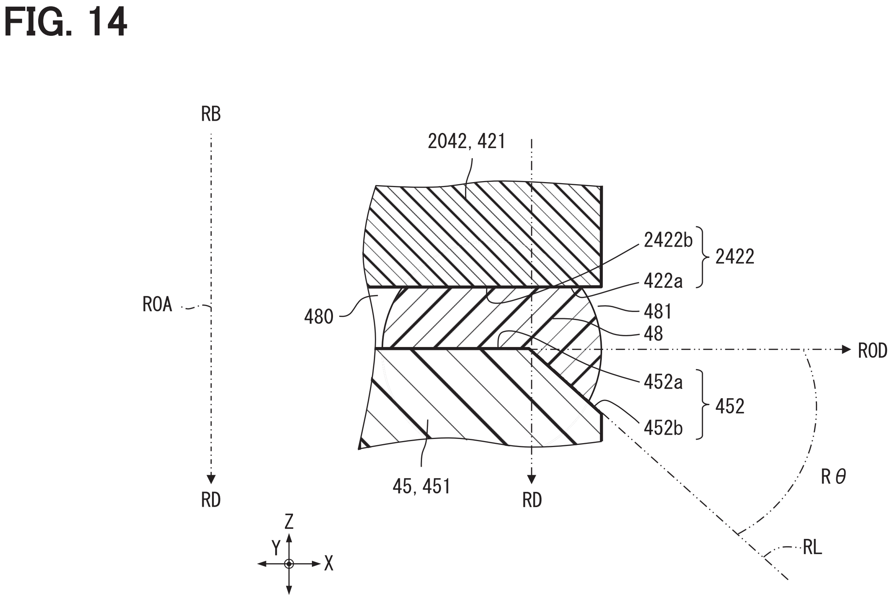

As shown in FIG. 14, in a receiver lens module 2042 of the second embodiment, a portion of a receiver bonding surface 2422, which forms the receiver sub-gap 481, forms a planar surface portion 2422b, which is substantially perpendicular to the geometric central axis, on the same plane as the planar surface portion 422a. The receiver sub-gap 481, which is wider in the light receiving direction RD than the receiver main gap 480, is formed between the planar surface portion 2422b and the slope surface portion 452b. Thus, in the placing step of S201, under the orientation where the slope surface portion 452b of the lower one (i.e., the receiver bonding surface 452) of the receiver bonding surfaces 2422, 452, which is set on the lower side of the upper one (i.e., the receiver bonding surfaces 2422) of the receiver bonding surfaces 2422, 452 in the gravity direction, is progressively spaced from the upper one (i.e., the receiver bonding surfaces 2422) of the receiver bonding surfaces 2422, 452 toward the radially outer side around the received light optical axis ROA, the receiver adhesive 48 is sandwiched between the receiver bonding surfaces 2422, 452.

### (Third Embodiment)

The third embodiment is a modification of the first embodiment.

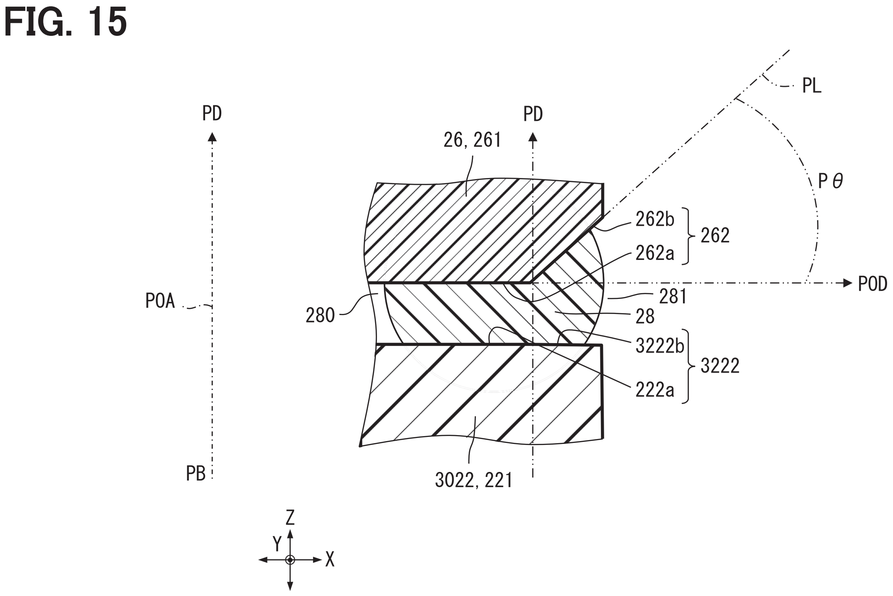

As shown in FIG. 15, in a projector light source module 3022 of the third embodiment, a portion of a projector bonding surface 3222, which forms the projector sub-gap 281, forms a planar surface portion 3222b, which is substantially perpendicular to the geometric central axis, on the same plane as the planar surface portion 222a. The projector sub-gap 281, which is wider in the light projecting direction PD than the projector main gap 280, is formed between the planar surface portion 3222b and the slope surface portion 262b. Thus, in the placing step of S101, under the orientation, which is opposite to the orientation shown in FIG. 15, where the slope surface portion 262b of the lower one (i.e., the lower projector bonding surface 262) of the projector bonding surfaces 3222, 262, which is set on the lower side of the upper one (i.e., the projector bonding surface 3222) of the projector bonding surfaces 3222, 262 in the gravity direction, is progressively spaced from the upper one (i.e., the projector bonding surface 3222) of the projector bonding surfaces 3222, 262 toward the radially outer side around the projected light optical axis POA, the projector adhesive 28 is sandwiched between the projector bonding surfaces 3222, 262.

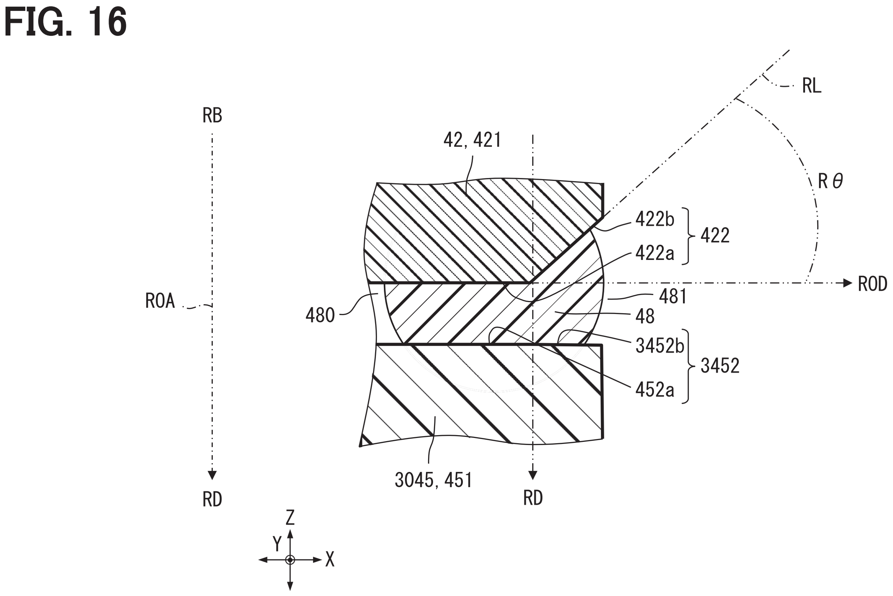

As shown in FIG. 16, in a receiver photodetector module 3045 of the third embodiment, a portion of a receiver bonding surface 3452, which forms the receiver sub-gap 481, forms a planar surface portion 3452b, which is substantially perpendicular to the geometric central axis, on the same plane as the planar surface portion 452a. The receiver sub-gap 481, which is wider in the light receiving direction RD than the receiver main gap 480, is formed between the planar surface portion 3452b and the slope surface portion 422b. Thus, in the placing step of S201, under the orientation, which is opposite to the orientation shown in FIG. 16, where the slope surface portion 422b of the lower one (i.e., the receiver bonding surface 422) of the receiver bonding surfaces 3452, 422, which is set on the lower side of the upper one (i.e., the receiver bonding surface 3452) of the receiver bonding surfaces 3452, 422 in the gravity direction, is progressively spaced from the upper one (i.e., the receiver bonding surface 3452) of the receiver bonding surfaces 3452, 422 toward the radially outer side around the received light optical axis ROA, the receiver adhesive 48 is sandwiched between the receiver bonding surfaces 3452, 422.

### (Fourth Embodiment)

The fourth embodiment is a modification of the first embodiment.

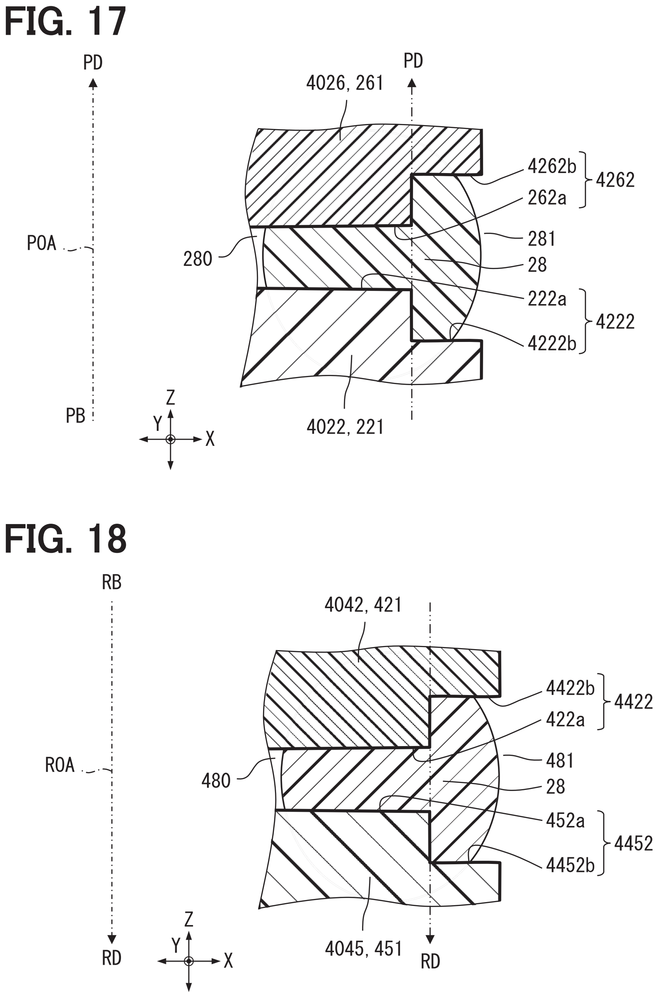

As shown in FIG. 17, in a projector light source module 4022 of the fourth embodiment, a portion of a projector bonding surface 4222, which forms the projector sub-gap 281, forms a planar surface portion 4222b, which is substantially perpendicular to the geometric central axis, in a form of a recess recessed from the planar surface portion 222a by a crank-shaped structure (a structure resembling the shape of a crank). Furthermore, in a projector lens module 4026 of the fourth embodiment, a portion of a projector bonding surface 4262, which forms the projector sub-gap 281, forms a planar surface portion 4262b, which is substantially perpendicular to the geometric central axis, in a form of a recess recessed from the planar surface portion 262a by a crank-shaped structure. The projector sub-gap 281, which is wider in the light projecting direction PD than the projector main gap 280, is formed between the planar surface portion 4222b and the planar surface portion 4262b. Thus, in the placing step of S101, the projector adhesive 28 is positioned between the projector bonding surface 4222 and the projector bonding surface 4262, which are set to be opposed to each other in the gravity direction.

As shown in FIG. 18, in a receiver photodetector module 4045 of the fourth embodiment, a portion of a receiver bonding surface 4452, which forms the receiver sub-gap 481, forms a planar surface portion 4452b, which is substantially perpendicular to the geometric central axis, in a form of a recess recessed from the planar surface portion 452a by a crank-shaped structure. Furthermore, in a receiver lens module 4042 of the fourth embodiment, a portion of a receiver bonding surface 4422, which forms the receiver sub-gap 481, forms a planar surface portion 4422b, which is substantially perpendicular to the geometric central axis, in a form of a recess recessed from the planar surface portion 422a by a crank-shaped structure. The receiver sub-gap 481, which is wider in the light receiving direction RD than the receiver main gap 480, is formed between the planar surface portion 4452b and the planar surface portion 4422b. Thus, in the placing step of S201, the receiver adhesive 48 is positioned between the receiver bonding surface 4452 and the receiver bonding surface 4422, which are set to be opposed to each other in the gravity direction.

### (Other Embodiments)

The embodiments have been explained above. However, the present disclosure is not limited to these embodiments and can be applied to various other embodiments and combinations without departing from the spirit and scope of the present disclosure.

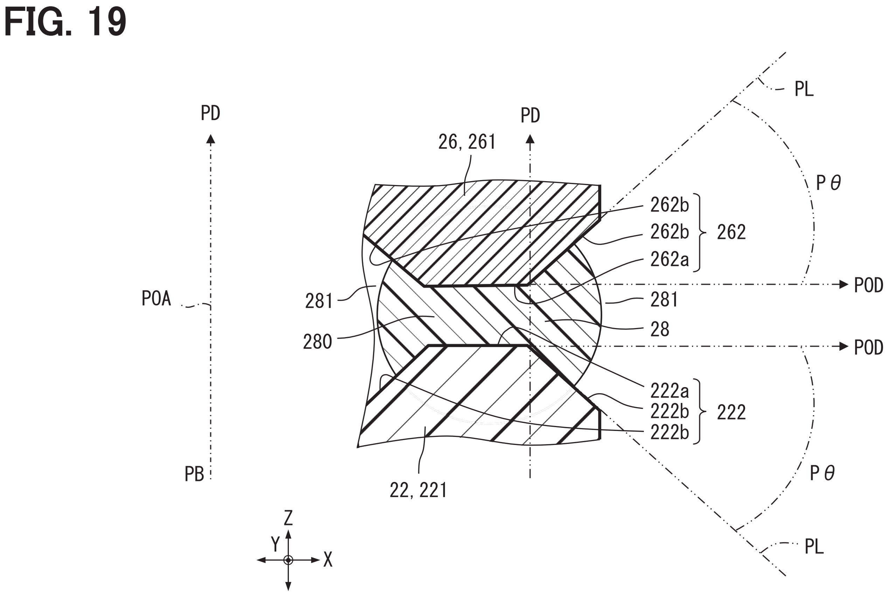

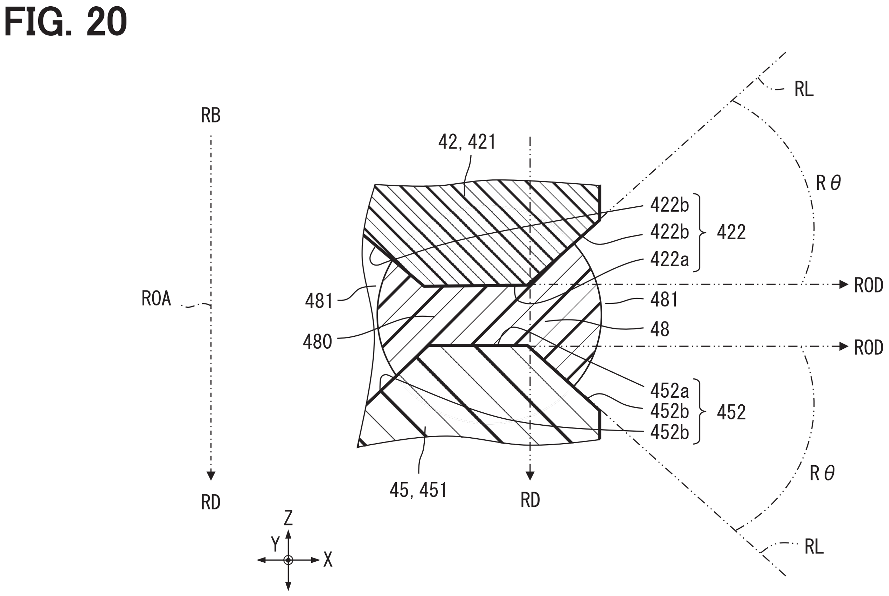

In a modification of the first to fourth embodiments, as shown in FIG. 19 (which representatively illustrates a modification of the first embodiment), the projector sub-gap 281 may be formed not only on the radially outer side but also on the radially inner side of the projector main gap 280 around the projected light optical axis POA, allowing the projector adhesive 28 to be relived from the projector main gap 280. In the modification of the first to fourth embodiments, as shown in FIG. 20 (which representatively illustrates the modification of the first embodiment), the receiver sub-gap 481 may be formed not only on the radially outer side but also on the radially inner side of the receiver main gap 480 around the received light optical axis ROA, allowing the receiver adhesive 48 to be relived from the receiver main gap 480.

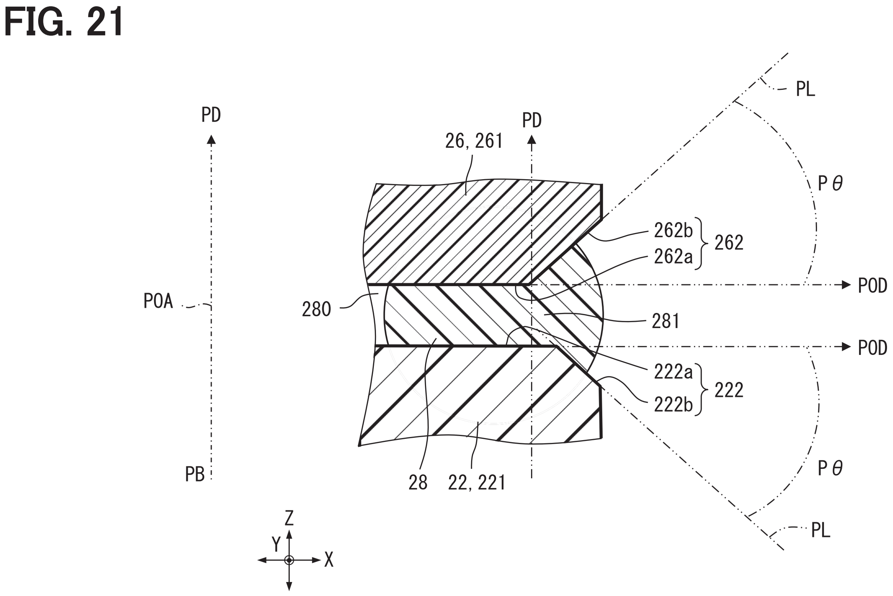

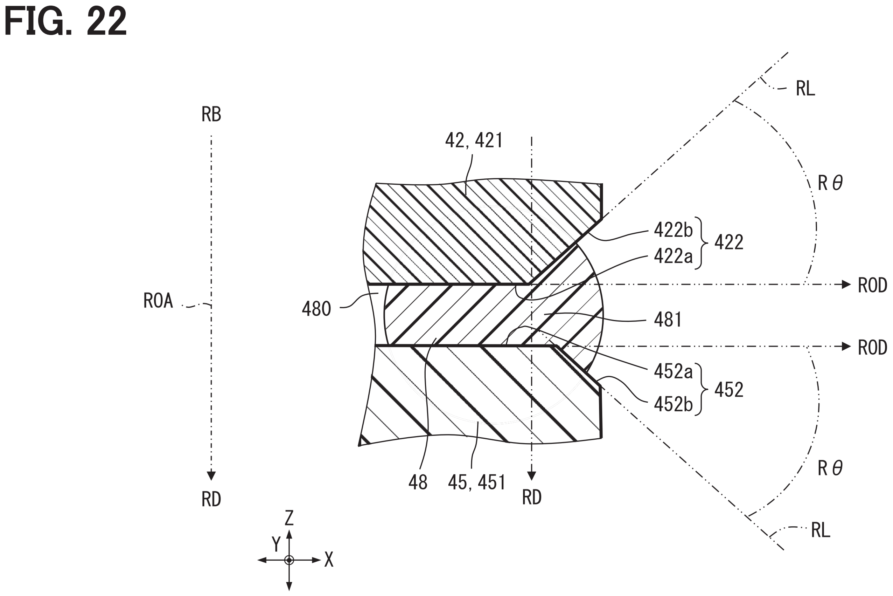

In a modification of the first embodiment, as shown in FIG. 21, the projector sub-gap 281 may be extended (expanded) between: the other slope surface portion 262b or 222b, which is among the slope surface portions 222b, 262b and extends to a position on the radially inner side of the one slope surface portion 222b, 262b among the slope surface portions 222b, 262b; and the planar surface portion 222a or 262a joined to the one slope surface portion 222b, 262b, around the projected light optical axis POA. In the modification of the first embodiment, as shown in FIG. 22, the receiver sub-gap 481 may be extended (expanded) between: the other slope surface portion 422b or 452b, which is among the slope surface portions 452b, 422b and extends to a position on the radially inner side of the one slope surface portion 452b, 422b among the slope surface portions 452b, 422b; and the planar surface portion 452a or 4222a joined to the one slope surface portion 452b, 422b, around the received light optical axis ROA.

In a modification of the first to fourth embodiments, each of the taper angles Pθ, Rθ may be set to an acute angle other than about 45 degrees. In a modification of the first and second embodiments, in place of the slope surface portions 222b, 452b, the planar surface portions 4222b, 4452b of the fourth embodiment, each of which is recessed by the crank-shaped structure, may be used. In a modification of the first and third embodiments, in place of the slope surface portions 262b, 422b, the planar surface portions 4262b, 4422b of the fourth embodiment, each of which is recessed by the crank-shaped structure, may be used.

In a modification of the first to fourth embodiments, the axial direction of the Y-axis extending in the horizontal direction and the axial direction of the X-axis direction extending in the vertical direction may be defined. In a modification of the first to fourth embodiments, the moving object, which is an application subject installed with the optical sensor 10, may be, for example, a mobile robot which can be remotely controlled. In a modification of the first to fourth embodiments, the application subject installed with the optical sensor 10 may be, for example, a stationary structure besides the moving object.

### (Addendum)

This specification discloses a plurality of technical aspects enumerated below, as well as various combinations thereof.

### (Technical Aspect 1)

According to technical aspect 1, there is provided an optical sensor (10) that is configured to detect an external environment by projecting a projection beam (PB) toward the external environment and receiving a reflection beam (RB) which is reflected from the external environment in response to the projection beam, the optical sensor including:
a projector light source module (22, 3022, 4022) that is configured to generate the projection beam;
a projector lens module (26, 2026, 4026) that is configured to guide the projection beam, which is outputted from the projector light source module, toward the external environment along a projected light optical axis (POA); and
a projector adhesive (28) that is ultraviolet and heat curable and is interposed between a projector bonding surface (222, 3222, 4222) of the projector light source module and a projector bonding surface (262, 2262, 4262) of the projector lens module which are opposed to each other in a light projecting direction (PD) of the projection beam along the projected light optical axis, wherein:
   the projector bonding surface of the projector light source module and the projector bonding surface of the projector lens module form therebetween:
      a projector main gap (280) that is filled with the projector adhesive; and
      a projector sub-gap (281) that has a width larger than a width of the projector main gap in the light projecting direction and opens toward a radially outer side around the projected light optical axis, wherein the projector adhesive is filled continuously from the projector main gap to the projector sub-gap and spans both the projector bonding surface of the projector light source module and the projector bonding surface of the projector lens module.

### (Technical Aspect 2)

According to technical aspect 2, there is provided the optical sensor according to technical aspect 1, wherein the projector bonding surface of at least one of the projector light source module and the projector lens module has a projector slope surface portion (222b, 262b) tilted so as to be progressively spaced from the projector bonding surface of another one of the projector light source module and the projector lens module toward the radially outer side around the projected light optical axis and form the projector sub-gap.

### (Technical Aspect 3)

According to technical aspect 3, there is provided the optical sensor according to technical aspect 2, wherein the projector slope surface portion of the at least one of the projector light source module and the projector lens module is tilted along a bisector line (PL) that bisects an angle between the light projecting direction and a perpendicular direction (POD), wherein the perpendicular direction is perpendicular to the light projecting direction.

### (Technical Aspect 4)

According to technical aspect 4, there is provided the optical sensor according to any one of technical aspects 1 to 3, including:
a receiver photodetector module (45, 3045, 4045) that is configured to detect the external environment by receiving the reflection beam;
a receiver lens module (42, 2042, 4042) that is configured to guide the reflection beam from the external environment toward the receiver photodetector module along a received light optical axis (ROA); and
a receiver adhesive (48) that is ultraviolet and heat curable and is interposed between a receiver bonding surface (452, 3452) of the receiver photodetector module and a receiver bonding surface (422, 2422) of the receiver lens module which are opposed to each other in a light receiving direction (RD) of the reflection beam along the received light optical axis, wherein:
   the receiver bonding surface of the receiver photodetector module and the receiver bonding surface of the receiver lens module form therebetween:
   a receiver main gap (480) that is filled with the receiver adhesive; and
   a receiver sub-gap (481) that has a width larger than a width of the receiver main gap in the light receiving direction and opens toward the radially outer side around the received light optical axis, wherein the receiver adhesive is filled continuously from the receiver main gap to the receiver sub-gap and spans both the receiver bonding surface of the receiver photodetector module and the receiver bonding surface of the receiver lens module.

### (Technical Aspect 5)

According to technical aspect 5, there is provided an optical sensor (10) that is configured to sense an external environment by projecting a projection beam (PB) toward the external environment and receiving a reflection beam (RB) which is reflected from the external environment in response to the projection beam, the optical sensor including:
a receiver photodetector module (45, 3045, 4045) that is configured to detect the external environment by receiving the reflection beam;
a receiver lens module (42, 2042, 4042) that is configured to guide the reflection beam from the external environment toward the receiver photodetector module along a received light optical axis (ROA); and
a receiver adhesive (48) that is ultraviolet and heat curable and is interposed between a receiver bonding surface (452, 3452) of the receiver photodetector module and a receiver bonding surface (422, 2422) of the receiver lens module which are opposed to each other in a light receiving direction (RD) of the reflection beam along the received light optical axis, wherein:
   the receiver bonding surface of the receiver photodetector module and the receiver bonding surface of the receiver lens module form therebetween:
      a receiver main gap (480) that is filled with the receiver adhesive; and
      a receiver sub-gap (481) that has a width larger than a width of the receiver main gap in the light receiving direction and opens toward a radially outer side around the received light optical axis, wherein the receiver adhesive is filled continuously from the receiver main gap to the receiver sub-gap and spans both the receiver bonding surface of the receiver photodetector module and the receiver bonding surface of the receiver lens module.

### (Technical Aspect 6)

According to technical aspect 6, there is provided the optical sensor according to technical aspect 4 or 5, wherein the receiver bonding surface of at least one of the receiver photodetector module and the receiver lens module has a receiver slope surface portion (422b, 452b) tilted so as to be progressively spaced from the receiver bonding surface of another one of the receiver photodetector module and the receiver lens module toward the radially outer side around the received light optical axis and form the receiver sub-gap.

### (Technical Aspect 7)

According to technical aspect 7, there is provided the optical sensor according to technical aspect 6, wherein the receiver slope surface portion of the at least one of the receiver photodetector module and the receiver lens module is tilted along a bisector line (RL) that bisects an angle between the light receiving direction and a perpendicular direction (ROD), wherein the perpendicular direction is perpendicular to the light receiving direction.

### (Technical Aspect 8)

According to technical aspect 8, there is provided a manufacturing method for manufacturing the optical sensor of any one of technical aspects 1 to 3, the manufacturing method including:
placing the projector adhesive in the projector main gap and the projector sub-gap;
precuring a portion of the projector adhesive by irradiating an ultraviolet light to the projector sub-gap from the radially outer side around the projected light optical axis; and
heat curing a rest of the projector adhesive after the precuring of the portion of the projector adhesive.

### (Technical Aspect 9)

According to technical aspect 9, there is provided the manufacturing method according to technical aspect 8, wherein the placing of the projector adhesive includes:
sandwiching the projector adhesive between:
a lower one of the projector bonding surface of the projector light source module and the projector bonding surface of the projector lens module, which is set on a lower side of an upper one of the projector bonding surface of the projector light source module and the projector bonding surface of the projector lens module in a gravity direction and has a projector slope surface portion (222b, 262b) that is progressively spaced from the upper one of the projector bonding surface of the projector light source module and the projector bonding surface of the projector lens module toward the radially outer side around the projected light optical axis; and
the upper one of the projector bonding surface of the projector light source module and the projector bonding surface of the projector lens module.

### (Technical Aspect 10)

According to technical aspect 10, there is provided a manufacturing method for manufacturing the optical sensor of any one of technical aspects 4 to 7, the manufacturing method including:
placing the receiver adhesive in the receiver main gap and the receiver sub-gap;
precuring a portion of the receiver adhesive by irradiating an ultraviolet light to the receiver sub-gap from the radially outer side around the received light optical axis; and
heat curing a rest of the receiver adhesive after the precuring of the portion of the receiver adhesive.

### (Technical Aspect 11)

According to technical aspect 11, there is provided the manufacturing method according to technical aspect 10, wherein the placing of the receiver adhesive includes:
sandwiching the receiver adhesive between:
a lower one of the receiver bonding surface of the receiver photodetector module and the receiver bonding surface of the receiver lens module, which is set on a lower side of an upper one of the receiver bonding surface of the receiver photodetector module and the receiver bonding surface of the receiver lens module in the gravity direction and has a receiver slope surface portion (422b, 452b) that is progressively spaced from the upper one of the receiver bonding surface of the receiver photodetector module and the receiver bonding surface of the receiver lens module toward the radially outer side around the received light optical axis; and
the upper one of the receiver bonding surface of the receiver photodetector module and the receiver bonding surface of the receiver lens module.

## Claims

1. An optical sensor (10) that is configured to detect an external environment by projecting a projection beam (PB) toward the external environment and receiving a reflection beam (RB) which is reflected from the external environment in response to the projection beam, the optical sensor comprising:
a projector light source module (22, 3022, 4022) that is configured to generate the projection beam;
a projector lens module (26, 2026, 4026) that is configured to guide the projection beam, which is outputted from the projector light source module, toward the external environment along a projected light optical axis (POA); and
a projector adhesive (28) that is ultraviolet and heat curable and is interposed between a projector bonding surface (222, 3222, 4222) of the projector light source module and a projector bonding surface (262, 2262, 4262) of the projector lens module which are opposed to each other in a light projecting direction (PD) of the projection beam along the projected light optical axis, wherein:
the projector bonding surface of the projector light source module and the projector bonding surface of the projector lens module form therebetween:
a projector main gap (280) that is filled with the projector adhesive; and
a projector sub-gap (281) that has a width larger than a width of the projector main gap in the light projecting direction and opens toward a radially outer side around the projected light optical axis, wherein the projector adhesive is filled continuously from the projector main gap to the projector sub-gap and spans both the projector bonding surface of the projector light source module and the projector bonding surface of the projector lens module.

2. The optical sensor according to claim 1, wherein the projector bonding surface of at least one of the projector light source module and the projector lens module has a projector slope surface portion (222b, 262b) tilted so as to be progressively spaced from the projector bonding surface of another one of the projector light source module and the projector lens module toward the radially outer side around the projected light optical axis and form the projector sub-gap.

3. The optical sensor according to claim 2, wherein the projector slope surface portion of the at least one of the projector light source module and the projector lens module is tilted along a bisector line (PL) that bisects an angle between the light projecting direction and a perpendicular direction (POD), wherein the perpendicular direction is perpendicular to the light projecting direction.

4. The optical sensor according to claim 1, comprising:
a receiver photodetector module (45, 3045, 4045) that is configured to detect the external environment by receiving the reflection beam;
a receiver lens module (42, 2042, 4042) that is configured to guide the reflection beam from the external environment toward the receiver photodetector module along a received light optical axis (ROA); and
a receiver adhesive (48) that is ultraviolet and heat curable and is interposed between a receiver bonding surface (452, 3452) of the receiver photodetector module and a receiver bonding surface (422, 2422) of the receiver lens module which are opposed to each other in a light receiving direction (RD) of the reflection beam along the received light optical axis, wherein:
the receiver bonding surface of the receiver photodetector module and the receiver bonding surface of the receiver lens module form therebetween:
a receiver main gap (480) that is filled with the receiver adhesive; and
a receiver sub-gap (481) that has a width larger than a width of the receiver main gap in the light receiving direction and opens toward the radially outer side around the received light optical axis, wherein the receiver adhesive is filled continuously from the receiver main gap to the receiver sub-gap and spans both the receiver bonding surface of the receiver photodetector module and the receiver bonding surface of the receiver lens module.

5. An optical sensor (10) that is configured to sense an external environment by projecting a projection beam (PB) toward the external environment and receiving a reflection beam (RB) which is reflected from the external environment in response to the projection beam, the optical sensor comprising:
a receiver photodetector module (45, 3045, 4045) that is configured to detect the external environment by receiving the reflection beam;
a receiver lens module (42, 2042, 4042) that is configured to guide the reflection beam from the external environment toward the receiver photodetector module along a received light optical axis (ROA); and
a receiver adhesive (48) that is ultraviolet and heat curable and is interposed between a receiver bonding surface (452, 3452) of the receiver photodetector module and a receiver bonding surface (422, 2422) of the receiver lens module which are opposed to each other in a light receiving direction (RD) of the reflection beam along the received light optical axis, wherein:
the receiver bonding surface of the receiver photodetector module and the receiver bonding surface of the receiver lens module form therebetween:
a receiver main gap (480) that is filled with the receiver adhesive; and
a receiver sub-gap (481) that has a width larger than a width of the receiver main gap in the light receiving direction and opens toward a radially outer side around the received light optical axis, wherein the receiver adhesive is filled continuously from the receiver main gap to the receiver sub-gap and spans both the receiver bonding surface of the receiver photodetector module and the receiver bonding surface of the receiver lens module.

6. The optical sensor according to claim 4, wherein the receiver bonding surface of at least one of the receiver photodetector module and the receiver lens module has a receiver slope surface portion (422b, 452b) tilted so as to be progressively spaced from the receiver bonding surface of another one of the receiver photodetector module and the receiver lens module toward the radially outer side around the received light optical axis and form the receiver sub-gap.

7. The optical sensor according to claim 6, wherein the receiver slope surface portion of the at least one of the receiver photodetector module and the receiver lens module is tilted along a bisector line (RL) that bisects an angle between the light receiving direction and a perpendicular direction (ROD), wherein the perpendicular direction is perpendicular to the light receiving direction.

8. A manufacturing method for manufacturing the optical sensor of any one of claims 1 to 3, the manufacturing method comprising:
placing the projector adhesive in the projector main gap and the projector sub-gap;
precuring a portion of the projector adhesive by irradiating an ultraviolet light to the projector sub-gap from the radially outer side around the projected light optical axis; and
heat curing a rest of the projector adhesive after the precuring of the portion of the projector adhesive.

9. The manufacturing method according to claim 8, wherein the placing of the projector adhesive includes:
sandwiching the projector adhesive between:
a lower one of the projector bonding surface of the projector light source module and the projector bonding surface of the projector lens module, which is set on a lower side of an upper one of the projector bonding surface of the projector light source module and the projector bonding surface of the projector lens module in a gravity direction and has a projector slope surface portion (222b, 262b) that is progressively spaced from the upper one of the projector bonding surface of the projector light source module and the projector bonding surface of the projector lens module toward the radially outer side around the projected light optical axis; and
the upper one of the projector bonding surface of the projector light source module and the projector bonding surface of the projector lens module.

10. A manufacturing method for manufacturing the optical sensor of any one of claims 4 to 7, the manufacturing method comprising:
placing the receiver adhesive in the receiver main gap and the receiver sub-gap;
precuring a portion of the receiver adhesive by irradiating an ultraviolet light to the receiver sub-gap from the radially outer side around the received light optical axis; and
heat curing a rest of the receiver adhesive after the precuring of the portion of the receiver adhesive.

11. The manufacturing method according to claim 10, wherein the placing of the receiver adhesive includes:
sandwiching the receiver adhesive between:
a lower one of the receiver bonding surface of the receiver photodetector module and the receiver bonding surface of the receiver lens module, which is set on a lower side of an upper one of the receiver bonding surface of the receiver photodetector module and the receiver bonding surface of the receiver lens module in a gravity direction and has a receiver slope surface portion (422b, 452b) that is progressively spaced from the upper one of the receiver bonding surface of the receiver photodetector module and the receiver bonding surface of the receiver lens module toward the radially outer side around the received light optical axis; and
the upper one of the receiver bonding surface of the receiver photodetector module and the receiver bonding surface of the receiver lens module.
